Europäisches Patentamt

European Patent Office

Office européen des brevets

(19)

(11) Veröffentlichungsnummer : **0 013 735**
**B1**

(12) **EUROPÄISCHE PATENTSCHRIFT**

(45) Veröffentlichungstag der Patentschrift :
09.06.82

(51) Int. Cl.³ : **B 60 C 15/04**

(21) Anmeldenummer : 79105138.6

(22) Anmeldetag : 13.12.79

(54) **Paketkern für den Wulst eines Luftreifens für Schrägschulterfelgen.**

(30) Priorität : 10.01.79 JP 760/79

(43) Veröffentlichungstag der Anmeldung :
06.08.80 (Patentblatt 80/16)

(45) Bekanntmachung des Hinweises auf die Patenterteilung : 09.06.82 Patentblatt 82/23

(84) Benannte Vertragsstaaten :
AT BE CH DE FR GB IT LU NL SE

(56) Entgegenhaltungen :
DE A 1 480 921
DE A 2 410 750
DE B 2 653 553
FR A 1 281 439
FR A 1 380 138
FR A 1 394 941
FR A 1 418 887
FR A 2 390 300

(73) Patentinhaber : Otto Kuhlmann GmbH. & Co. KG
Lohstrasse 26
D-5870 Hemer-Westig (DE)

(72) Erfinder : Pfeiffer, Herbert
Wittekindstrasse 5
D-5870 Hemer (DE)

(74) Vertreter : Selting, Günther, Dipl.-Ing. et al
Deichmannhaus am Hauptbahnhof
D-5000 Köln 1 (DE)

Paketkern für den Wulst eines Luftreifens für Schrägschulterfelgen

Die Erfindung betrifft einen im Querschnitt parallelogrammförmigen ringartigen Paketkern für den Wulst eines Luftreifens für Schrägschulterfelgen, dessen radiale Kerninnenfläche parallel zur Sitzfläche des Wulstes gegenüber der Achsrichtung des Luftreifens geneigt ist, bei dem im Querschnitt eckige Drähte in Drahtlagen nebeneinander liegen und diese auf einer entsprechend der Schräge der Felgenschulter konischen Abstützung mehrfach übereinander zu dem Paketkern aufgewickelt sind.

Bekanntermaßen dient der Wulst eines Luftreifens zur Abdichtung des Reifens an der Radfelge und zur Aufnahme bzw. zur Übertragung der komplex auftretenden Quer- und Längskräfte.

Es ist bekannt, die ringartigen Paketkerne aus dicht nebeneinanderliegenden, im Querschnitt rechteckigen Drähten herzustellen, die mehrfach übereinander auf eine entsprechend der Schräge der Felgenschulter konische Trommel aufgewickelt werden (DE-B-2 653 553). Die Drähte werden unmittelbar vor dem Aufwickeln senkrecht zur Ringebene des Paketkerns bogenförmig derart verformt, daß sich ein parallelogrammartiger Drahtquerschnitt ausbildet. Die Drähte der einzelnen Drahtlagen des im Querschnitt parallelogrammförmigen Paketkernes liegen bei einem parallelogrammförmigen Drahtquerschnitt vollflächig übereinander, so daß sich zwischen den Drahtwindungen der einzelnen Lagen keinerlei Zwischenräume ergeben. Da die einzelnen Drahtlagen mit jeweils parallelogrammförmigem Querschnitt der Einzeldrähte vollflächig übereinanderliegen, besteht die Gefahr, daß bei Einwirkung äußerer Kräfte, z.B. bei der Verformung des Reifens beim Wenden der Karkasse aber auch bei späterer Belastung des Reifens, Verschiebungen zwischen den einzelnen Drahtlagen auftreten, so daß der Wulstkern sich in unerwünschter Weise verformt und an Stabilität verliert.

Bekannt ist ferner ein Paketkern (FR-A-2 390 300), der aus mehreren übereinandergewickelten Lagen eines vor dem Aufwickeln parallelogrammförmig verformten Bandmaterials besteht. Das Bandmaterial kann seinerseits aus mehreren Einzeldrähten mit trapezförmigem Querschnitt zusammengesetzt sein. In jedem Fall ergeben sich Bänder mit durchgehendem oder aus Einzeldrähten zusammengesetztem Querschnitt, die jeweils eine Lage bilden. Die einzelnen Lagen werden mit vollflächiger Berührung übereinandergewickelt, so daß auch hier die Gefahr einer Verschiebung einer Wickellage gegen die benachbarte Wickellage besteht.

Der Erfindung liegt die Aufgabe zugrunde, einen Paketkern der eingangs genannten Art zu schaffen, bei dem die Stabilität der Querschnittsform verbessert ist.

Zur Lösung dieser Aufgabe ist erfindungsgemäß vorgesehen, daß die Drähte jeder Drahtlage des Paketkerns untereinander gleiche trapezförmige Querschnitte aufweisen, und daß die Drähte jeder Drahtlage die benachbarten Drähte der nächstfolgenden Drahtlage linienförmig berühren.

Auf diese Weise wird erreicht, daß jeder Draht sich mit einer Kante auf dem Draht der darunterliegenden Drahtlage abstützt und verhakt. Die konische Außenfläche einer Drahtlage ist nicht durchgehend, sondern sie hat Abstufungen, so daß für die darüberliegende nächste Lage keine durchgehende Auflagefläche vorhanden ist, sondern jeweils nur linienförmige Abstützungen erfolgen. Dies hat zur Folge, daß an den Drahtkanten besonders große Kräfte auftreten, durch die sich die Drahtkanten jeweils in die darunterliegende Drahtlage eingraben und gegenseitige Verschiebungen erschwert werden. Auch das Herausspringen von Einzeldrähten aus ihrer Drahtlage beim Wenden der Karkasse wird durch die erfindungsgemäße Ausbildung der Kernquerschnittes verhindert.

Anhand eines abgebildeten Ausführungsbeispieles wird die Erfindung nachfolgend näher erläutert. Es zeigt:

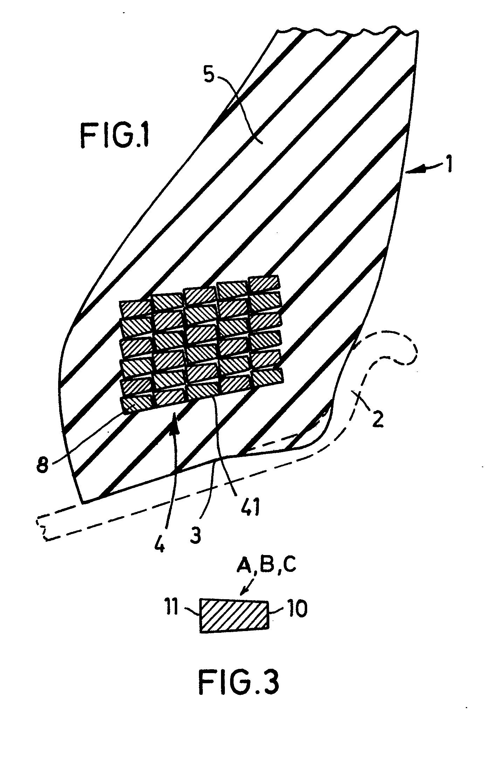

Figur 1 einen Schnitt durch den Wulst eines Luftreifens an einer Schrägschulterfelge,

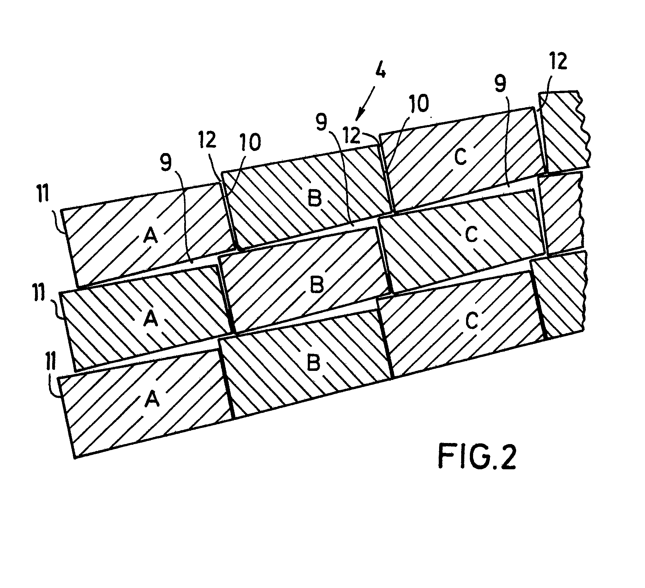

Figur 2 eine vergrößerte Schnittdarstellung durch den Paketkern in Fig. 1, und

Figur 3 einen Querschnitt eines Einzeldrahtes.

Ein Wulst 1 eines schlauchlosen Luftreifens liegt mit seiner Sitzfläche 3 an einer Schrägschulter 2 einer entsprechenden Radfelge an. Entsprechend der Ausbildung der Radfelge ist die Sitzfläche 3 des Wulstes 1 gegenüber der Horizontalen geneigt.

Im Innern des Wulstes 1 ist um einen ringartigen Paketkern 4 eine Karkassenlage 5 herumgeschlagen, die mit Stahlgeflecht verstärkt ist.

Der Paketkern hat einen angenähert parallelogrammartigen Querschnitt mit zu der Sitzfläche 3 paralleler Kerninnenfläche 41. Er besteht aus übereinandergewickelten Drahtlagen 8, die durch im Querschnitt trapezförmige Einzeldrähte A, B, C gebildet werden.

Die schmaleren Enden 10 aller Drähte A, B, C, des Paketkerns 4 sind gleichsinnig gegen die Außenfläche des Wulstes 1 gerichtet und stützten sich jeweils aus den breiteren Enden 11 der Drähte A, B, C der nächsten Drahtlage 8 ab. Hierdurch entstehen zwischen den Drahtlagen Abstandsräume 9, die im Querschnitt keilförmig sind. Außerdem können sich bei nicht ganz exakt parallelogrammförmigen Drahtquerschnitt schmale Keilspalte 12 zwischen den aufeinanderfolgenden schmaleren und breiteren Enden der Einzeldrähte A, B, C, jeder einzelnen Drahtlage bilden.

Durch die Abstandsräume 9 berühren sich die Drähte A, B, C in den aufeinandergewickelten Drahtlagen 8 nur entlang Linien. Eine flächige Metall-auf-Metall-Berührung findet nicht statt.

## Ansprüche

1. Im Querschnitt parallelogrammförmiger ringartiger Paketkern (4) für den Wulst (1) eines Luftreifens für Schrägschulterfelgen, dessen radiale Kerninnenfläche (41) parallel zur Sitzfläche (3) des Wulstes gegenüber der Achsrichtung des Luftreifens geneigt ist, bei dem im Querschnitt eckige Drähte (A, B, C) in Drahtlagen (8) nebeneinander liegen und diese auf einer entsprechend der Schräge der Felgenschulter (2) konischen Abstützung mehrfach übereinander zu dem Paketkern aufgewickelt sind, dadurch gekennzeichnet, daß die Drähte (A, B, C) jeder Drahtlage (8) des Paketkerns (4) untereinander gleiche trapezförmige Querschnitte aufweisen, und daß die Drähte (A, B, C) jeder Drahtlage (8) die benachbarten Drähte (A, B, C) der nächstfolgenden Drahtlage (8) linienförmig berühren.

2. Paketkern nach Anspruch 1, dadurch gekennzeichnet, daß die schmaleren Enden (10) aller Drähte (A, B, C) des Paketkerns (4) gleichsinnig gegen die Außenseite des Luftreifenwulstes (1) gerichtet sind, und daß die schmaleren Enden (10) der Drähte (A, B, C) einer Drahtlage (8) sich auf den breiteren Enden (11) der Drähte (A, B, C) der nächsten Drahtlage (8) abstützen.

## Claims

1. Annular-type built-up core (4) of parallelogram-shaped cross section for the bead (4) of a pneumatic tire for wheel rims with inclined shoulders, the radial inward core surface (41) being inclined in relation to the direction of the axis of the pneumatic tire to be parallel to the bead seat (3), the wires (A, B, C) of the core being angular in cross section and disposed side by side in wire layers (8) and being wound in multiple superposition to form the built-up core upon a support of conical shape to conform to the inclination of the wheel rim shoulder (2), characterized in that the wires (A, B, C) of each wire layer (8) of the built-up core (4) all have the same trapezoidal cross section and that the wires (A, B, C) of each wire layer (8) are in linear contact with the adjacent wires (A, B, C) of the next wire layer (8).

2. Built-up core according to claim 1, characterized in that the narrower ends (10) of all wires (A, B, C) of the built-up core (4) are directed in the same sense towards the outside of the pneumatic tire bead (1) and that the narrower ends (10) of the wires (A, B, C) of a wire layer (8) are supported on the broader ends (11) of the wires (A, B, C) of the next wire layer (8).

## Revendications

1. Noyau (4) en paquet, annulaire et de section en parallélogramme, pour le talon (1) d'un pneu pour jantes à épaulements obliques, dont la surface intérieure radiale (41) est inclinée sur la direction de l'axe du pneu parallèlement à la surface d'appui (3) dudit talon, des fils métalliques (A, B, C), de section polygonale, étant juxtaposés pour former des couches (8) lesquelles sont enroulées plusieurs fois sur elles-mêmes autour d'un support conique dont la conicité correspond à l'inclinaison de l'épaulement (2) de la jante, pour former un noyau en paquet, caractérisé en ce que les fils (A, B, C) de chacune des couches (8) du noyau en paquet (4) présentent des sections droites trapézoïdales identiques entre elles et que les fils (A, B, C) de chaque couche (8) n'entrent en contact avec les fils contigus (A, B, C) de la couche suivante (8) que de façon linéaire.

2. Noyau en paquet selon la revendication 1, caractérisé en ce que les extrémités plus étroites (10) de tous les fils (A, B, C) du noyau en paquet (4) sont orientées dans le même sens, contre la face extérieure du talon de pneu (1) et que lesdites faces de bout plus étroites (10) desdits fils (A, B, C) d'une couche de fils (8) s'appuient sur les extrémités plus larges (11) des fils (A, B, C) de la couche suivante (8).

FIG.1

FIG.3

FIG.2